# EUROPEAN PATENT SPECIFICATION

(11) **EP 2 673 051 B1**
(45) Date of publication and mention of the grant of the patent: **19.07.2017**
(21) Application number: 12794555.8
(22) Date of filing: 16.11.2012
(51) Int. Cl.: A62B 35/00, E04G 21/32, F16G 11/04

(54) **SAFETY SYSTEM FOR A SLANTED ROOF**
SICHERHEITSSYSTEM FÜR EIN GENEIGTES DACH
SYSTÈME DE SÉCURITÉ POUR UNE TOITURE INCLINÉE

(30) Priority: 17.11.2011 NL 2007804
(43) Date of publication of application: 18.12.2013
(73) Proprietor: Luchtankers B.V., 7391 AE Twello (NL)
(72) Inventor: BORRA, Hans Antonius, 3707 TB Zeist (NL)
(74) Representative: De Vries & Metman
(86) International application number: PCT/NL2012/050816
(87) International publication number: WO 2013/095095

(56) References cited:
- US-A1- 2011 240 403
- US-B1- 7 007 350

## Description

The invention relates to a safety system, in particular a fall protection system, for a roof, more particularly a pitched roof, comprising an anchor point and a safety line with which a person working on the roof can be secured to the anchor point. The invention further relates to a method of attaching a safety line to an anchor point on a (pitched) roof.

Such systems are known, for instance from EP 593 150. This publication relates to "a safety device for ensuring the safety of any person requiring access to a roof area of a building whether during building, maintenance works, inspection, or cleaning."

The device according to EP 593 150 comprises "a roof ridge portion (6), a channel (2) integral to the said roof ridge portion (6), a traveller (4) slidably attached to the said channel (2), and attachment means for a safety harness (5) attached to the said traveller (4)."

In many cases the safety line is provided at one end with a carabiner, which is attached to the anchor point from the eaves, for instance from the point where a ladder is set in position, using a lance. The roofer has to take this, often heavy, lance up with him and reach up high with it, which may cause him/her to lose balance.

The invention has for its object to provide a system by means of which a safety line or an accessory, such as scaffolding or one or more tools or ladders for maintenance or building purposes, can be attached relatively simply and safely to a higher anchor point, for instance to an anchor point on or immediately beneath the ridge of a pitched roof.

To this end the system according to the invention is characterized by a first coupling member attached to or forming part of the anchor point, a second coupling member attached to or forming part of the safety line, preferably an end of the safety line, or accessory and suitable for establishing a connection with the first coupling member, and a means, such as a hoisting line or guide, for moving, e.g. pulling or pushing, the second coupling member to the first coupling member.

In this way the safety line or accessory e.g. can be pulled up with the hoisting line or pushed up along a line or rail from a lower point, such as a point where a ladder is set in position, and a connection established between the coupling members.

In one embodiment the hoisting line, such as a steel cable, is fitted over a run-around, for instance a pin, disc or pulley, on, in or near the anchor point and the hoisting line preferably passes through the first coupling member, so that as the safety line is pulled up, the second coupling member is inherently aligned with the first coupling member.

In a further embodiment the system comprises means for detachably attaching the hoisting line to the second coupling member, preferably on the central axis of the second coupling member.

In a further embodiment the connection is a snap connection, for instance of the type used in pneumatic quick couplers. In that case, apart from pulling or pushing the second coupling member onto the first coupling member, no further actions are required to establish a connection between the first and the second coupling member.

In a further embodiment the connection is maintained when the safety line, at least the exterior of the safety line, is subjected to tensile load. It is preferred for the second coupling member to comprise an unlocking mechanism for undoing (disconnecting) the connection.

In a further embodiment the safety line comprises a hollow sheath with a cable housed therein which is capable of moving vis-a-vis the sheath and which is connected to the unlocking mechanism. With such a cable the unlocking mechanism can be operated from the other end of the safety line. To this end, the other end of the safety line facing away from the second coupling member is preferably provided with a control device for moving the cable in the sheath.

The invention further relates to a method of attaching a safety line or accessory, such as scaffolding or one or more tools or ladders for maintenance or building purposes, to an anchor point on a roof, more particularly a pitched roof, wherein the safety line or accessory is connected to a hoisting line or guide, is moved with the hoisting line or along guide to the anchor point, and a connection is established between the safety line or accessory and the anchor point.

In one embodiment the anchor point comprises a first coupling member, the safety line or accessory comprises a second coupling member, and the second coupling member is pulled or pushed onto or into the first coupling member, thus establishing a connection.

In a further embodiment the safety line or accessory is lowered down with the hoisting line, after the work on the roof is completed.

Preferably, the said actions are performed from the eaves, for instance from a point where a ladder is set in position, before the roofer enters the roof.

For completeness' sake reference is made to the following publications.

US 7,007,350 relates to a spring-loaded compression cable grab (20) used for cinching and attaching a wire rope cable to a fixed object. Figure 25 of US 7,007,350 illustrates how the cable grab is used in a fall protection system.

US 2011/003065 relates to a Y-shaped belt provided with two carabiners with which the belt can be secured to so-called *via ferrata.*

US 2011/240403 relates to a lifeline connector assembly for releasably interconnecting a first portion and a second portion of a lifeline, the first portion including a first distal end to which a first stop is operatively connected, the second portion including a second distal end to which a second stop is operatively connected, comprises a first stop operatively connected to the first distal end, a second stop operatively connected to the second distal end, and a receiving member operatively connected to the second stop and configured and arranged to receive at least a portion of the first stop thereby interconnecting the first portion and the second portion.

Within the framework of the present invention "safety line" and "hoisting line" refer to any long, thin and flexible element that is suitable for, respectively, securing a person to an anchor on a roof as described above or hoisting a coupling member and safety line. Examples include cords, lifelines, lanyards, and elements such as (steel) cables and chains, e.g. plastic-coated chains.

The invention will now be elucidated with reference to the figures, in which an example of the invention is shown.
Figure 1 is a perspective view of a pitched roof provided with a hoisting line according to the invention.
Figure 2 is a perspective view of a pitched roof provided with a hoisting line and a safety line according to the invention.
Figure 3 shows a section across an anchor point and safety line according to the invention.
Figures 4 and 5 are a perspective views of a hipped end of a roof provided with anchors according to the present invention.

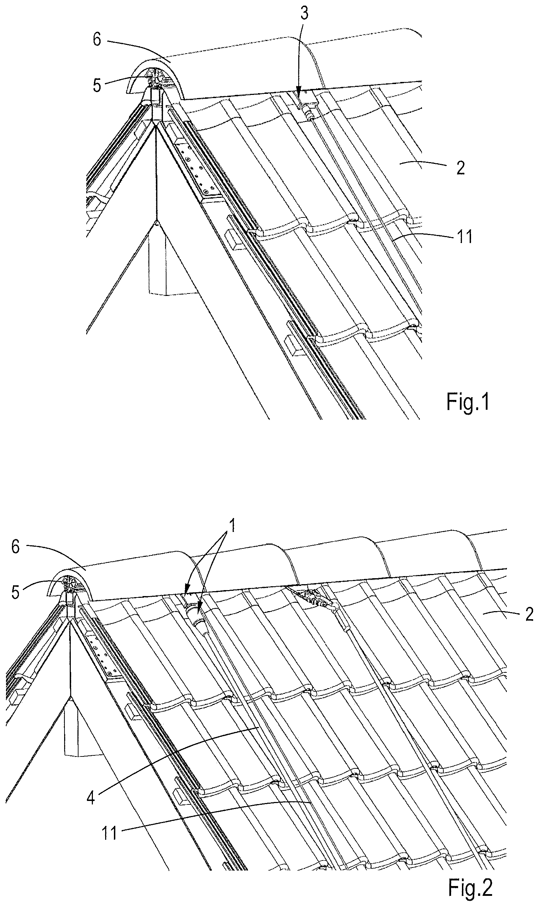

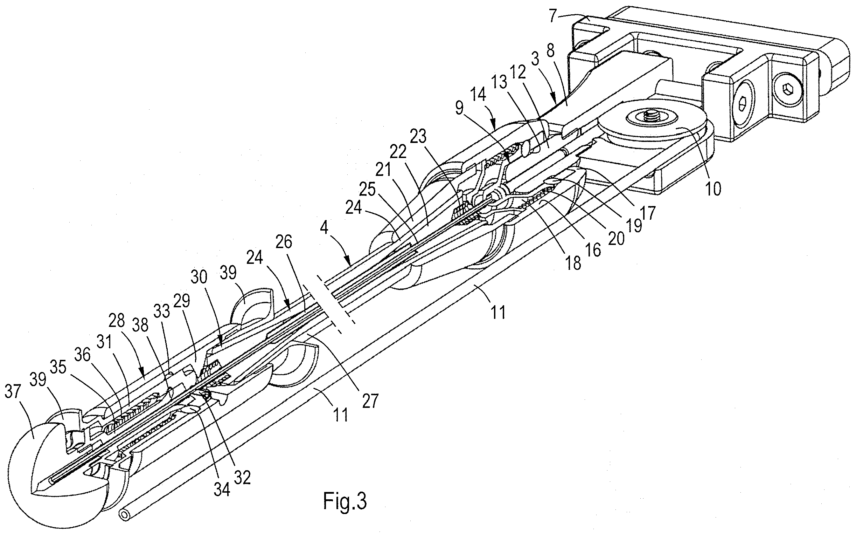

Figures 1 and 2 show a fall protection system 1 for use on a pitched roof 2. The system comprises an anchor point 3 and a safety line 4 with which a person working on the roof can be secured to the anchor point 3. In this example the anchor point 3 is movably mounted in a rail 5 located directly beneath the ridge tile 6 of the pitched roof 2. A detailed description of such a rail and movable anchor point can be found in European patent application 10189428.5, published as EP 2 447 437 A1. As is shown in the section in Figure 3, the anchor point 3 comprises a top portion 7 movably housed in the rail 5 and a bottom portion 8 rotatably mounted in the top portion 7. The bottom portion 8 is provided with a first coupling member 9, a pulley 10, and a hoisting line 11, e.g. a steel cable, passing over the pulley 10 and through the coupling member 9. To this end the coupling member is provided with a hollow pin 12 which extends tangentially vis-a-vis the pulley 10 and which is provided with an annular slot 13 around the circumference near the end of the pin.

A second coupling member 14 is attached to one end of the safety line 4 and is suitable for establishing a connection with the first coupling member 9. Within the framework of the invention it is preferred that the second coupling member 14 can be pulled or pushed onto the first coupling member 9 and that a snap connection is established in the process, which connection can only be unlocked using a further member, an example of which will be discussed in detail below.

The second coupling member 14 comprises a quick coupler and a rope clamp. The quick coupler in its turn comprises an outer portion or sheath 16, which is provided at one end with an inwards facing edge 17. In the sheath 16 an inner portion or locking bush 18 is housed, which is provided with a number of recesses along its circumference. In each recess a movable member, for instance a bearing ball 19, is housed. The locking bush 18 is forced against the inwards facing edge 17 by means of a spring 20. In this uttermost position the bearing balls 19 are forced inwards by the sheath 16, i.e. in the direction of the central axis of the second coupling member 14. The inner diameter of the sheath 16 increases in proximal direction (i.e., in the direction of the user, away from the first coupling member), so that, when the second coupling member 14 is pulled onto the first coupling member 9, the locking bush 18 in the second coupling member 14 is pushed inwards through the hollow pin 12 of the first coupling member 9, the bearing balls 19 can recede outwards (away from the central axis), and the end of the pin 12 can pass the bearing balls 19. When the bearing balls 19 reach the annular slot 13 around the pin 12, the locking bush 18 is forced upwards by the spring 20 and the bearing balls 19 slip inside, i.e. into the annular slot 13. This snap connection can only be undone by pulling the locking bush 18 back vis-a-vis the sheath 16, against the action of the spring 20. Pulling or pushing on the sheath 16 cannot result in the connection being undone.

The rope clamp which is part of the second coupling member 14 comprises an outer portion 21 with a conical bore of which the inner diameter increases in distal direction (away from the user). In the bore there is an also conical bush 22, which is forced in proximal direction with a spring 23 and which is provided with a central, cylindrical bore.

In this example the safety line 4 comprises a hollow sheath 24 in which a cable 25 is housed, which can move vis-a-vis the sheath 24 in longitudinal direction. The cable is made for instance of steel. The sheath 24 is composed for instance of an inner hollow wound spiral 26 made of steel wire with a protective covering of plastic or braided cord 27 around it.

The sheath 24 of the safety line 4 is clamped between the outer portion 21 and the conical bush 22 and the cable 25 is passed through the central bore and clamped in the locking bush 18.

Behind the locking bush 18 or, as in the example shown, inside the locking bush 18 an internal screw thread 26 is fitted, so that the end of the hoisting line 11, provided with an external screw thread, can be screwed into the second coupling member 14 and unscrewed again after use.

The end of the safety line 4 facing away from the second coupling member 14 is provided with a rope clamp, which basically matches the rope clamp in the second coupling member, and a control device 28 for moving the cable 25 in the sheath 24. In this example the control device 28 comprises a housing 29 in which a rope clamp 30, a bush 31, and a locking mechanism are mounted. The remaining end of the cable 25 is firmly secured in the bush 31, for instance by means of a clamp or radial screw 32. The locking mechanism comprises an annular slot 33 in the inner wall of the housing 29. The bush 31 is provided with a number of recesses along its circumference, in each of which a movable member, for instance a bearing ball 34, is housed. Inside the bush 31 there is a pin 35, which is forced in proximal direction (outwards) by a spring 36 and which is provided with a push button 37 with which the pin 35 can be forced inwards by a user, counter to the action of the spring 36. The (distal) end of the pin 34 has a thickening 38, which forces the bearing balls 34 outwards and into the annular slot 33. When the push button 37 is pushed in, the radial locking of the bearing balls 34 is undone, so that as the bush 31 is pulled outwards, these bearing balls 34 are able to move radially into and out of the annular slot 33.

The housing 29 and the unlocking bush 31 are both provided with a flange 39, in order to facilitate the pulling outwards of the bush 31 and the cable 25 and thus the undoing of the connection between the first and the second coupling member 9, 14.

The fall protection system is used as follows. A roofer sets a ladder in position against the eaves at the point where the hoisting line is located and climbs up with a safety line. At the top of the ladder or standing on the eaves, the roofer secures one end of the hoisting line in the coupling member of the safety line. Next, he pulls the safety line up with the hoisting line and, finally, the second coupling member onto the first coupling member, in which process a connection (coupling) is established. Next, the roofer connects his harness to the safety line. The roofer can now move safely on and along the roof with the anchor point following him. The fall factor and the pendulum effect are minimal or zero. When he has completed his work, he returns to the ladder and undoes the connection. Next, he lowers the safety line with the hoisting line and climbs down via the ladder.

The fall protection system according to the invention can be connected and disconnected relatively quickly, safely, and simply. Moreover, in the case of a suitable hoisting line selection, in particular in terms of diameter and colour, the system is hardly visible if at all, i.e. it has no or hardly any effect on the appearance of the roof. In an

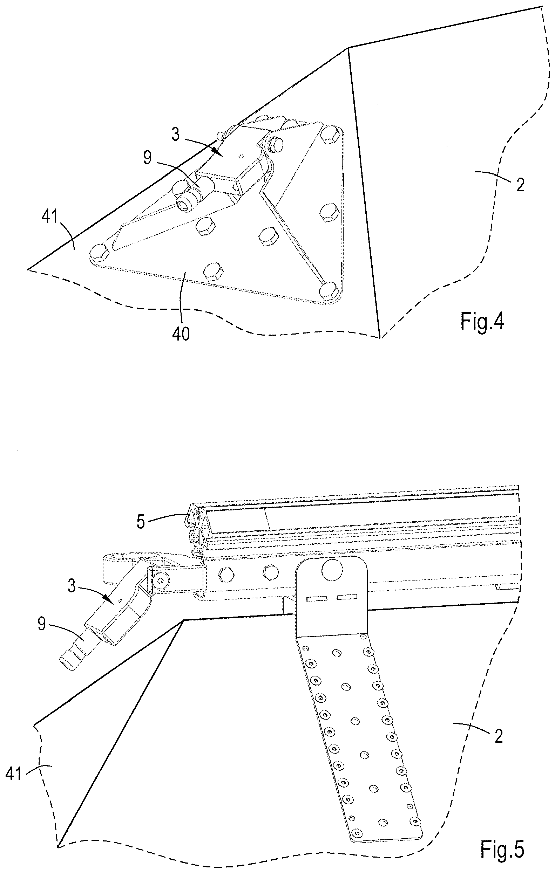

Figures 4 and 5 show embodiments comprising a fixed anchor point 3. In these examples, the anchor point comprises a mounting plate 40 attached, e.g. bolted, directly to the hipped end 41 of a pitched roof (Figure 4) or it is fixedly attached to one of the ends of a rail 5 mounted on the ridge of roof (Figure 5).

Hipped ends of roofs are usually provided with a plurality of hooks, which may affect the appearance of the roof and/or require annual inspection. An anchor point according to the present invention may replace all or at least a plurality of such hooks. Further, at least if the anchor point is attached at or near the apex of the hipped end of the roof, in case of a fall, hazardous pendulum effects are reduced or avoided altogether.

The invention is not limited to the described embodiments and can be varied within the framework of the claims.

## Claims

1. Safety system (1) for a roof, more particularly a pitched roof (2), comprising an anchor point (3) and an accessory or a safety line (4) with which a person working on the roof (2) can be secured to the anchor point (3), **characterised by** a first coupling member (9) attached to or forming part of the anchor point (3), a second coupling member (14) attached to or forming part of the safety line (4) or accessory and suitable for establishing a connection with the first coupling member (9), and a hoisting line (11) or a guide for moving the second coupling member (14) to the first coupling member (9).

2. System (1) according to claim 1, wherein the hoisting line (11) is fitted over a run-around (10) on, in or near the anchor point (3).

3. System (1) according to claim 1 or 2, wherein the hoisting line (11) passes through the first coupling member (9).

4. System (1) according to any one of the preceding claims, comprising means (26) for detachably attaching the hoisting line (11) to the second coupling member (14), preferably on the central axis of the second coupling member (14).

5. System (1) according to any one of the preceding claims, wherein the connection is a snap connection.

6. System (1) according to any one of the preceding claims, wherein the connection is maintained when the safety line or accessory is subjected to tensile load.

7. System (1) according to any one of the preceding claims, wherein the second coupling member (14) comprises an unlocking mechanism (16, 18, 19) for undoing the connection.

8. System (1) according to claim 7, wherein the safety line (4) comprises a hollow sheath (24) in which a cable (25) is housed which is capable of moving vis-a-vis the sheath (26, 27) and which is connected to the unlocking mechanism (16, 18, 19).

9. System (1) according to claim 8, wherein the end of the safety line (4) facing away from the second coupling member (14) is provided with a control device (28) for moving the cable (25) in the sheath (24).

10. System according to claim 9, wherein the control device (28) is provided with a locking mechanism in order to prevent the connection between the coupling members (9, 14) being undone by the control device (28) by mistake.

11. Method of attaching a safety line (4) or accessory to an anchor point (3) on a roof, more particularly a pitched roof (2), wherein
the safety line (4) or accessory is connected to a hoisting line (11) or guide,
is moved with the hoisting line (11) or along the guide to the anchor point (3), and
a connection is established between the safety line (4) or accessory and the anchor point (3).

12. Method according to claim 11, wherein the anchor point (3) comprises a first coupling member (9) and the safety line (4) or accessory comprises a second coupling member (14) and wherein the second coupling member (14) is pulled or pushed onto or into the first coupling member (9) with the hoisting line (11).

13. Method according to claim 11 or 12, wherein the safety line (4) or accessory is lowered with the hoisting line (11) or guide after the work on the roof (2) is completed.

14. Method according to any one of claims 11-13, wherein the said actions are performed from the eaves (2).

## Patentansprüche

1. Sicherheitssystem (1) für ein Dach, insbesondere ein Schrägdach (2), aufweisend einen Verankerungspunkt (3) und Zubehör oder Sicherheitsleine (4), mittels welcher eine auf dem Dach (2) arbeitende Person an dem Verankerungspunkt (3) gesichert werden kann,
**gekennzeichnet durch** ein erstes Kopplungsglied (9), das an dem Verankerungspunkt (3) befestigt ist oder einen Teil des Verankerungspunkts (3) bildet, ein zweites Kopplungsglied (14), das an der Sicherheitsleine oder dem Zubehör (4) befestigt ist oder einen Teil der Sicherheitsleine (4) oder des Zubehörs bildet und das geeignet ist, eine Verbindung mit dem ersten Kopplungsglied (9) herzustellen, und eine Hebeleine (11) oder Führung zum Bewegen des zweiten Kopplungsglieds (14) zu dem ersten Kopplungsglieds (9).

2. System (1) nach Anspruch 1, wobei die Hebeleine (11) an, in oder in der Nähe des Verankerungspunkts (3) über eine Rolle (10) geführt ist.

3. System (1) nach Anspruch 1 oder 2, wobei die Hebeleine (11) durch das erste Kopplungsglied (9) hindurch geführt ist.

4. System (1) nach einem der vorstehenden Ansprüche, aufweisend Einrichtungen (26) zum lösbaren Anbringen der Hebeleine (11) an dem zweiten Kopplungsglied (14), vorzugsweise an der zentralen Achse des zweiten Kopplungsglieds (14).

5. System (1) nach einem der vorstehenden Ansprüche, wobei die Verbindung eine Schnappverbindung ist.

6. System (1) nach einem der vorstehenden Ansprüche, wobei die Verbindung aufrechterhalten wird, wenn die Sicherheitsleine oder das Zubehör einer Zuglast ausgesetzt ist.

7. System (1) nach einem der vorstehenden Ansprüche, wobei das zweite Kopplungsglied (14) einen Entriegelungsmechanismus (16, 18, 19) zum Lösen der Verbindung aufweist.

8. System (1) nach Anspruch 7, wobei die Sicherheitsleine (4) eine hohle Hülle (24) aufweist, in welcher ein Kabel (25) untergebracht ist, das bezüglich der Hülle (26, 27) bewegbar ist und das mit dem Entriegelungsmechanismus (16, 18, 19) verbunden ist.

9. System (1) nach Anspruch 8, wobei das von dem zweiten Kopplungsglied (14) abgewandte Ende der Sicherheitsleine (4) mit einer Steuervorrichtung (28) zum Bewegen des Kabels (25) in der Hülle (24) versehen ist.

10. System nach Anspruch 9, wobei die Steuervorrichtung (28) mit einem Verriegelungsmechanismus versehen ist, um zu verhindern, dass die Verbindung zwischen den Kopplungsgliedern (9, 14) fälschlicherweise von der Steuervorrichtung (28) gelöst wird.

11. Verfahren zum Anbringen einer Sicherheitsleine (4) oder von Zubehör an einem Verankerungspunkt (3) auf einem Dach, insbesondere einem Schrägdach (2), wobei
die Sicherheitsleine (4) oder das Zubehör mit einer Hebeleine (11) oder Führung verbunden wird,
mittels der Hebeleine (11) oder entlang der Führung zu dem Verankerungspunkt (3) bewegt wird, und
eine Verbindung zwischen der Sicherheitsleine (4) oder dem Zubehör und dem Verankerungspunkt (3) hergestellt wird.

12. Verfahren nach Anspruch 11, wobei der Verankerungspunkt (3) ein erstes Kopplungsglied (9) aufweist und die Sicherheitsleine (4) oder das Zubehör ein zweites Kopplungsglied (14) aufweist und wobei das zweite Kopplungsglied (14) mittels der Hebeleine (11) an oder in das erste Kopplungsglied (9) gezogen oder gedrückt wird.

13. Verfahren nach Anspruch 11 oder 12, wobei nach Abschluss der Arbeit auf dem Dach (2) die Sicherheitsleine (4) oder das Zubehör mittels der Hebeleine (11) oder Führung herabgelassen wird.

14. Verfahren nach einem der Ansprüche 11 bis 13, wobei die Arbeitsschritte von der Traufe (2) aus durchgeführt werden.

## Revendications

1. Système de sécurité (1) pour un toit, plus particulièrement un toit en pente (2), comprenant un point d'ancrage (3) et un accessoire ou une corde de sécurité (4) auquel ou à laquelle une personne travaillant sur le toit (2) peut être arrimée au niveau du point d'ancrage (3),
**caractérisé par** un premier organe de couplage (9) attaché au ou faisant partie du point d'ancrage (3), un second organe de couplage (14) attaché à ou faisant partie de la corde de sécurité (4) ou de l'accessoire et approprié pour établir un raccordement avec le premier organe de couplage (9), et une corde de levage (11) ou un guide pour déplacer le second organe de couplage (14) vers le premier organe de couplage (9).

2. Système (1) selon la revendication 1, dans lequel la corde de levage (11) est montée sur un demi-tour (10) sur, dans ou à proximité du point d'ancrage (3).

3. Système (1) selon la revendication 1 ou 2, dans lequel la corde de levage (11) passe par le premier organe de couplage (9).

4. Système (1) selon l'une quelconque des revendications précédentes, comprenant un moyen (26) pour attacher de façon détachable la corde de levage (11) au second organe de couplage (14), de préférence sur l'axe central du second organe de couplage (14).

5. Système (1) selon l'une quelconque des revendications précédentes, dans lequel le raccordement est un raccordement à encliquetage.

6. Système (1) selon l'une quelconque des revendications précédentes, dans lequel le raccordement est maintenu lorsque la corde de sécurité ou l'accessoire est soumis(e) à un effort de traction.

7. Système (1) selon l'une quelconque des revendications précédentes, dans lequel le second organe de couplage (14) comprend un mécanisme de déverrouillage (16, 18, 19) pour défaire le raccordement.

8. Système (1) selon la revendication 7, dans lequel la corde de sécurité (4) comprend une gaine creuse (24) dans laquelle est logé un câble (25) qui est capable de se déplacer vis-à-vis de la gaine (26, 27) et qui est raccordé au mécanisme de déverrouillage (16, 18, 19).

9. Système (1) selon la revendication 8, dans lequel l'extrémité de la corde de sécurité (4) orientée à l'opposé du second organe de couplage (14) est pourvue d'un dispositif de commande (28) pour déplacer le câble (25) dans la gaine (24).

10. Système selon la revendication 9, dans lequel le dispositif de commande (28) est pourvu d'un mécanisme de verrouillage afin d'empêcher que le raccordement entre les organes de couplage (9, 14) ne soit défait par le dispositif de commande (28) par erreur.

11. Procédé d'attache d'une corde de sécurité (4) ou d'un accessoire à un point d'ancrage (3) sur un toit, plus particulièrement un toit en pente (2), dans lequel
la corde de sécurité (4) ou l'accessoire est raccordé(e) à une corde de levage (11) ou à un guide, est déplacé(e) avec la corde de levage (11) ou suivant le guide vers le point d'ancrage (3), et
un raccordement est établi entre la corde de sécurité (4) ou l'accessoire et le point d'ancrage (3).

12. Procédé selon la revendication 11, dans lequel le point d'ancrage (3) comprend un premier organe de couplage (9) et la corde de sécurité (4) ou l'accessoire comprend un second organe de couplage (14) et dans lequel le second organe de couplage (14) est tiré ou poussé sur ou dans le premier organe de couplage (9) avec la corde de levage (11).

13. Procédé selon la revendication 11 ou 12, dans lequel la corde de sécurité (4) ou l'accessoire est abaissé(e) avec la corde de levage (11) ou le guide après l'achèvement du travail sur le toit (2).

14. Procédé selon l'une quelconque des revendications 11 à 13, dans lequel lesdites actions sont réalisées à partir de l'avant-toit (2).
